# EUROPEAN PATENT APPLICATION

(11) **EP 4 521 705 A1**
(43) Date of publication of application: **12.03.2025**
(21) Application number: 24198847.6
(22) Date of filing: 06.09.2024
(51) Int. Cl.: H04L 45/24, H04L 12/46, H04L 45/00, H04L 45/50, H04L 45/52, H04L 45/586, H04L 45/7453, H04L 45/76

(54) **MULTIPATHING WITH GUEST FLOW LABELS**

(30) Priority: 11.09.2023 US 202318244627
(71) Applicant: Google LLC, Mountain View, CA 94043 (US)
(72) Inventor: WANG, Yong, Mountain View, 94043 (US); GRIGGS, Tyler, Mountain View, 94043 (US); VALANCIUS, Vytautas, Mountain View, 94043 (US)
(74) Representative: Betten & Resch

(57) **Abstract**

The disclosed technology is directed to techniques and mechanisms that provide reliable packet delivery in cloud computing environments. For example, an aspect of the disclosed technology is a process that replicates an original packet at the guest layer or within a virtual machine (VM) of a cloud computing system, adds different flow labels to the packet copies and original packet at the guest layer or virtualization layer, and maps two or more of the copies and original packets to different tunnels between source and destination nodes.

## Description

### BACKGROUND

Reliable packet delivery is an important feature of cloud computing systems. In some cases, customers may have relatively strict reliability requirements, *e*.*g*., zero packet loss, low latency, 5 9s (99.999%) availability, that can be very challenging to achieve - particularly where traffic is cross-regional over a wide area network (WAN). For instance, some implementations can be too slow to react or cannot handle time sensitive traffic, *e*.*g*., traffic that uses the User Datagram Protocol (UDP) for communications and modern applications such as data streaming services. Re-pathing is one approach to providing reliability in which upon detection of a failure, traffic is delivered via another path. Re-pathing may not work well where UDP traffic is involved, as there typically is no feedback loop to provide failure information to the source and adding application-layer feedback loops may not prove timely enough to handle some temporary failures, *e*.*g*., failures that last around 100 ms.

### SUMMARY

The disclosed technology is directed to techniques and mechanisms that provide reliable packet delivery in cloud computing environments. For example, an aspect of the disclosed technology is a process that replicates an original packet at the guest layer or within a virtual machine (VM) of a cloud computing system, adds different flow labels to the packet replicas or copies, including the original packet, at the guest layer or virtualization layer, and maps the packet copies to different tunnels between source and destination host machines or nodes. Generally, tunnels are pathways used to transport data associated with one protocol using infrastructure of another protocol, *e.g.,* by encapsulating a data frame or packet associated with a first protocol with an additional header from a second protocol. The process provides an additional layer of protection beyond that provided at the network layer or physical layer (of the Open System Interconnect Model) between the source and destination hosts (*e*.*g*., re-pathing). For instance, because the copies and original packets are mapped to different tunnels, they are likely to traverse different paths between the source and destination hosts. Thus, a failure on one or more paths is mitigated against as long as a copy of the packet traverses a path not impacted by the failure. Service interruptions can therefore be mitigated or, in many cases, avoided. Providing an additional layer of protection at the guest layer or between VM pairs can improve network reliability performance.

An aspect of the disclosed technology is a packet communication system. The system comprises a packet source that outputs a data packet; and a first host machine, the first host machine comprising: a first virtual gateway implemented as a virtual machine and communicatively coupled to the packet source to receive the data packet, the first virtual gateway generating two or more packet copies of the data packet and associating a different guest flow label with each of the packet copies and a sequence number with each of the packet copies to generate a first modified packet copy having a first guest flow label and a second modified packet copy having a second guest flow label; and a first computing resource communicatively coupled to the first virtual gateway, the first computing resource adding a first cloud flow label to the first modified packet copy and a second cloud flow label to the second modified packet copy and, based on the first and second guest flow labels, associating the first modified packet copy with a first tunnel and the second modified packet copy with a second tunnel different than the first tunnel, the first and second tunnels used to communicate traffic between the first host machine and a second host machine.

In accordance with this aspect of the disclosed technology, a guest flow label is used to maintain a sequential flow of packets that belong to a communication between two virtual gateways. Further, the first computing resource associating the first modified packet copy with the first tunnel comprises hashing the first guest flow label associated with the first modified packet copy to produce a first hash value and associating the first hash value with the first tunnel. In this regard, associating the first hash value with the first tunnel comprises bucketing, based on the first hash value, the first modified packet copy in a table identifying tunnels between the first virtual host and a second virtual host used for transporting data between the first and second host machines. In addition, the first cloud flow label is used to generate an IPv6 packet encapsulating the first modified packet copy. Further still, the first hash value is different than a second hash value associated with a hash of the second guest flow label.

Further in accordance with this aspect of the disclosed technology, the first virtual gateway comprises a first virtual machine.

Further yet, the two or more packet copies generated comprise IPv4 data packets. In addition, the first computing resource encapsulates the first modified packet copy and the second modified packet copy in respective IPv6 packets that respectively include the first cloud flow label and the second cloud flow label.

Further in accordance with this aspect of the disclosed technology, the system comprises a second virtual gateway that receives the first modified packet copy and the second modified packet copy and uses the sequence number to discard the first packet copy or the second packet copy. Further still, the second virtual gateway uses a sliding window to determine whether the first modified packet copy or the second modified packet copy is redundant.

Additionally, the first and second tunnels comprise tunnels that are keyed to an IPv6 Flow Label.

Another aspect of the disclosed technology is a process that replicates an original packet at the guest layer or within a virtual machine (VM) of a cloud computing system, adds different flow labels to the packet copies and original packet at the guest layer or virtualization layer, and maps two or more of the copies and original packets to different tunnels between source and destination nodes.

Another aspect of the disclosed technology is a packet processing method for data transmission. The method comprises generating a first copy and a second copy of a data packet at a virtual machine layer of a source host machine configured to support virtual machines; appending, at the virtual machine layer, a sequence number and a first flow label to the first copy of the data packet to create a first modified data packet and the sequence number and a second flow label to the second copy of the data packet to create a second modified data packet, the first flow label being different than the second flow label; creating a first hash value based on the first flow label and a second hash value based on the second flow label; associating, based on the first hash value, the first flow label with a first tunnel used for data transmissions from the source host machine; associating, based on the second hash value, the second flow label with a second tunnel used for the data transmissions from the source host machine, the second tunnel being different than the first tunnel; and encapsulating the first modified data packet in a first transmission data packet having a first network layer flow label and the second modified data packet in a second transmission data packet having a second network layer flow label, wherein the first network layer flow label identifies packets for transmission on the first tunnel and the second network layer flow label identifies packets for transmission on the second tunnel.

In accordance with this aspect of the disclosed technology, the first and second flow labels comprise IPv6 Flow Labels. In addition, the first and second network layer flow labels comprise IPv6 Flow Labels.

In accordance with this aspect of the disclosed technology, associating the first flow label with a tunnel comprises bucketing, based on the first hash value, the first modified data packet in a table identifying one or more tunnels between the source host machine and a destination host machine. Further, the data packet comprises an IPv4 data packet. In addition, the steps of creating, associating, and encapsulating are performed by a virtual machine manager.

In accordance with this aspect of the disclosed technology, the method comprises randomly generating the first flow label and the second flow label.

Additionally in accordance with the method, the virtual machine layer comprises a guest layer in a virtual computing environment.

### BRIEF DESCRIPTION OF THE DRAWINGS

Figure 1 is an example system in accordance with an aspect of the disclosed technology.
Figure 2 is an example system in accordance with an aspect of the disclosed technology.
Figure 3 shows examples of packets in accordance with an aspect of the disclosed technology.
Figure 4 is an example flow chart in accordance with an aspect of the disclosed technology.
Figure 5 is an example flow chart in accordance with an aspect of the disclosed technology.
Figure 6 is an example virtual computing environment in accordance with the disclosed technology.

### DETAILED DESCRIPTION

The disclosed technology may be implemented as a system, process, or apparatus. For instance, the disclosed technology may be implemented in a virtual private cloud (VPC) system. The system includes a packet source or generator, one or more virtual gateways, one or more virtual machines (VMs), and a packet sink or listener. The system also includes a first physical host at the packet source and a second physical host at the destination or listener. The virtual gateways run on the physical hosts at a virtualization layer, e.g., using a virtual machine manager (VMM) or hypervisor. The packet source generally functions as a multicast producer that publishes data to a multicast group. The virtual gateways run in virtual machines and function to provide networking services.

A virtual gateway replicates the original packets it receives from a packet source and adds different flow labels to the original packet and the copies of the original packet. The virtual gateway then provides each replica with its respective flow label to a VMM at a first host at the source. Hosts are configured to transport packets received from one or more virtual gateways (at a packet source) over multiple network paths to other virtual gateways (at a listener). The VMM at the first physical host maps each replica to a different tunnel connecting the first physical host to the second physical host. By using different tunnels between the first and second physical hosts, network reliability can be improved even in applications that require communication of source packets across a region that offers lower reliability, *e.g.,* 3 9s (99.9%) or 4 9s (99.99%).

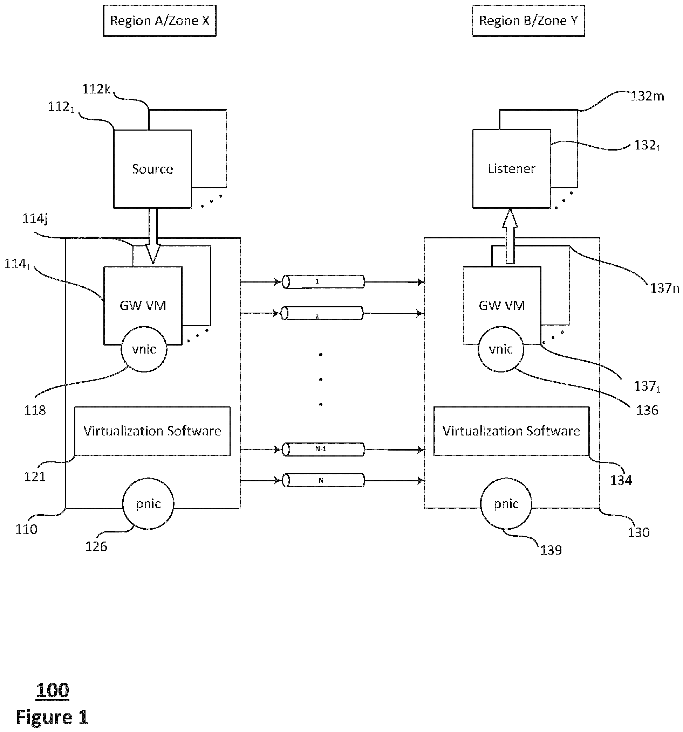

Figure 1 shows an example system 100, in accordance with an aspect of the disclosed technology. System 100 may be implemented as a VPC system. The system 100 includes a first host 110 and a second host 130. The first and second hosts 110, 130 are physical hosts or physical machines that can support multiple VMs using virtualization software. The first host 110 is located in region A/zone X, while the second physical host is located in region B/zone Y. The different regions may comprise different physical locations connected by devices of a wide area network (WAN), though that is not necessary. Generally, the first and second hosts are hosts that can communicate with each other over distinct paths, *e*.*g*., communicate using networks that use routing to provide multiple paths between each pair of hosts. The first host 110 is coupled to a data source 112. The source 112 can be located at the same location as first host 110 or remotely from first host 110, *e.g.,* at a customer's location, depending on the service application. The data source 112 will typically include one or more multicast producers 112₁ through 112ₖ. The second host 130 is coupled to a listener 132, which may include multiple listeners 132₁ through 132ₘ. Listener 132 may be co-located with or located remotely from second host 130.

Respective sources and listeners form pairs that communicate information from source to listener. In this regard, there is no need for an explicit connection between each pair. For instance, a source and listener can be connected by having a source produce one or more datagrams/frames/packets to a group IP address and having listeners within the IP group listen for the datagrams/frames/packets sent. For example, a group can have one source that produces one or more packets, *e.g.,* a producer, and ten listeners. When the source produces one packet, all ten listeners should receive a copy, even though the source only produced one copy (instead of ten copies). A group can be formed using multicast addressing at the internet layer for IPv4 or IPv6 multicast. In another example, a group may be formed as the link layer as an Ethernet multicast. The disclosed technology may also be implemented where unicast addressing is employed such as, for example, using IPv4 or IPv6.

The first host 110 is configured to include multiple virtual gateways 114₁ through 114ⱼ. Each gateway includes a virtual network interface card (vnic) 118. Each virtual gateway 114 runs in a VM that is enabled by virtualization software 121. Virtualization software 121 is typically referred to as a virtual machine manager (VMM) or hypervisor. In addition to abstracting the first host 110 resources and managing hosting of multiple VMs, the virtualization software 121 includes a network virtualization stack that supports isolated virtual networks and multi-pathing capability between the first host 110 and second host 130. The multipathing capability is depicted as N tunnels between the first and second hosts 110, 130.

Each tunnel is keyed to a different IPv6 Flow Label. This is, a flow of data packets is selected for transmission using a given tunnel based on a given flow label. In general, a flow label field is provided in the header of an IPv6 packet. A packet source can use this field to designate a sequence of packets sent from a particular source to a particular unicast or multicast destination as belonging to the same communication. Using a flow label, a host can manage communications over multiple paths. Specifically, flow labels can be used to inform switches what packets should take the same path on a network. In accordance with an aspect of the disclosed technology, each replica of a packet (including the original and copies) from the source is assigned to a different tunnel based on the flow label associated with the packet. The first host 110 includes a physical network interface card (pnic) 126 which facilitates communications on the network infrastructure connecting the first and second hosts, 110, 130.

As also shown in Figure 1, the second host 130 includes virtualization software 134 and multiple virtual gateways 137₁ through 137ₙ. Virtualization software 134 is configured similarly to virtualization software 121. In addition, virtual gateways 137₁ through 137ₙ are configured similarly to virtual gateways 114₁ through 114ⱼ and include a vnic 138. Specifically, gateways 114 and 137 run the same software or binaries. They can also both serve as both producers and listeners. In the example of Figure 1, data is depicted as flowing from host 110 to host 130. Accordingly, virtual gateways 137₁ through 137ₙ are different than virtual gateways 114₁ through 114ⱼ in that gateways 114 perform the function of providing source packets to listener 132 that were successfully communicated from first host 110 to second host 130. However, if the listener 132 decides to publish data, the data flow will reverse as will the roles of gateways 114 and 137.

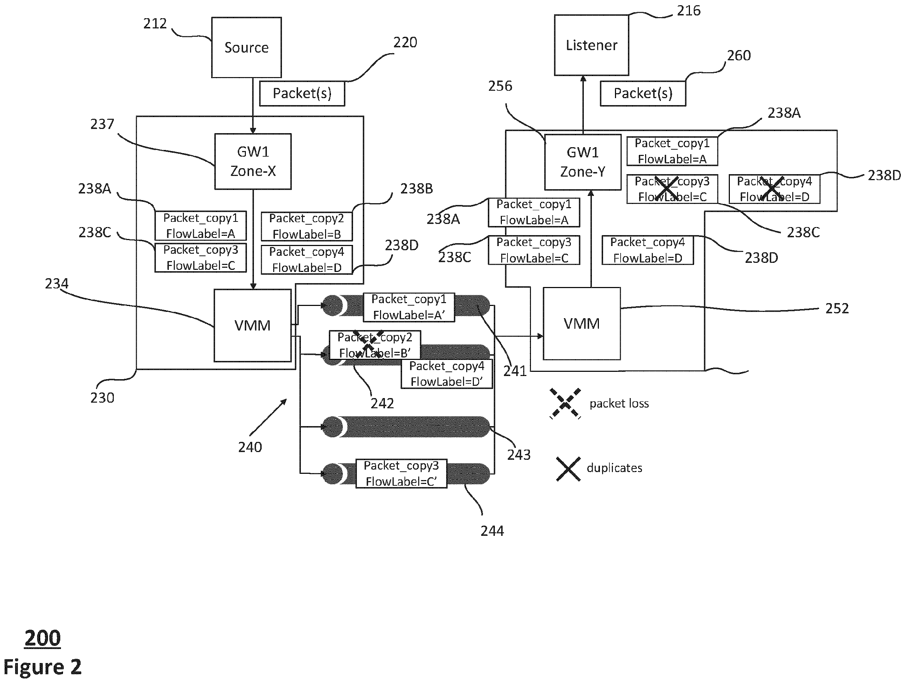

Figure 2 is an example system 200, in accordance with an aspect of the disclosed technology that shows further operational details of the disclosed technology. System 200 is a simplified version of system 100, in that a single source is shown communicating with a single listener, along with other elements involved in such communications. Specifically, source 212 generates one or more packets, such as one or more packets 220, that are destined for delivery to listener 216. For multicast applications, the destination IP address would not be the listener 216 IP address but rather the multicast group IP address to which the source 212 intends to produce data. In this regard, a given listener 216 would receive the data only if that listener tells the virtual gateway it is interested in a copy of any data or data packets belonging to a given group. As such, listener as used throughout is intended to cover multicast applications, as well as other applications such as unicasts or where a given source intends to communicate with a given listener. Packets 220 from source 212 are considered original packets. In this instance, packets 220 are shown as a single packet 220 to simplify this description. Typically, there will be a stream of such packets for delivery to listener 216.

As shown, host 230 includes a VMM 234. In addition to creating and managing the resources needed to support virtual gateway 237 in a VM, VMM 234 also supports running multiple operating systems that may support different guest applications at a guest layer. As such, source 212 is shown as a separate block from host 230 but in some examples source 212 is an application instance running on a VM supported by VMM 234. In other examples, source 212 may be supported by a different host co-located with or remotely located from host 230.

Packet 220 generated by source 212 is received at virtual gateway 237, which is also labelled as GW1 located in zone-x, where it is further processed. For example, virtual gateway 237, which in some examples is a multicast gateway, generates four replicas or copies of packet 220 and associates a different or unique flow label with each copy. Flow labels may be generated randomly, such as for example, by using a random number generator. Flow labels should not be identical to increase or maximize the probability that when they are mapped to tunnels 240 they are mapped to different tunnels.

As shown, the four replicas of packet 220 include <Packet_copy1 FlowLabel=A> 238A, <Packet_copy2 FlowLabel=B> 238B, <Packet_copy3 FlowLabel=C> 238C, and <Packet_copy4 FlowLabel=D> 238D. One of the replicas or copies can be the original source packet 220 or all four replicas may be newly generated copies of original source packet 220. The Flow Labels A, B, C, and D generated by virtual gateway 237 may be considered Guest Flow Labels. The Guest Flow Labels are assigned to four tunnels or flows 240 associated with the transmission paths between host pairs 230, 250.

Virtual gateway 237 also appends a sequence number to each replica or copy 238A, 238B, 238C, and 238D. The same sequence number is appended to each replica or copy 238A, 238B, 238C, and 238D and is used to uniquely identify each copy of the same packet for deduplication processing at the destination. The sequence number can also be used to avoid out-of-order delivery of packets.

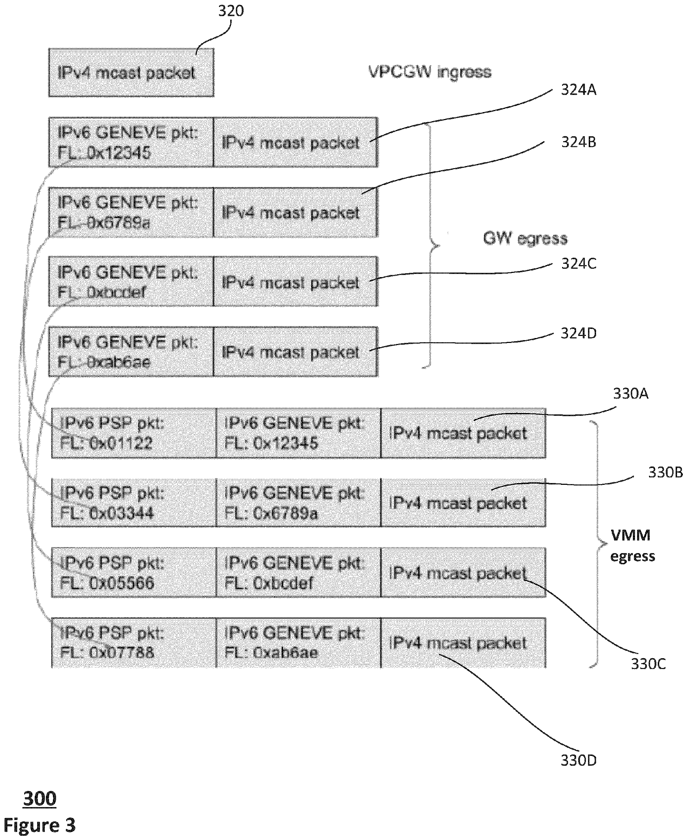

The packets generated by the virtual gateway 237 are formatted as IPv6 packets. In this regard, in the event the source 212 generates IPv4 packets, the virtual gateway 237 will encapsulate IPv4 packets in IPv6 packets. Nevertheless, it is also possible to use IPv4 encapsulated in IPv4 packets as long as a mechanism is used to provide different Flow Labels to the VMM 234. Figure 3 shows example packets processed in accordance with the disclosed technology. As shown, the packet generated by source 212 is an IPv4 packet 320, and is provided to GW1 237 (denoted as GW ingress in Figure 3). Packet 320 is replicated four times - as packets 324A, 324B, 324C, and 324D. Each of these packets includes an IPv6 header processed in accordance with a tunnel protocol, such as for example GENEVE (Generic Network Virtualization Encapsulation), and each includes a different flow label, *i.e.,* 0x12345 for packet 324A, 0x6789a for packet 324B, 0xbcdef for packet 324C, and 0xab6ae for packet 324D.

Returning to Figure 2, replicas or copies 238A, 238B, 238C, and 238D are received by VMM 234 where they are further processed for transmission via tunnels 240 between first host 230 and second host 250. As shown in this example, there are four possible tunnels that each of packets 238A, 238B, 238C, and 238D may be mapped to. These tunnels are labelled as 241 (Tunnel 1), 242 (Tunnel 2), 243 (Tunnel 3), and 244 (Tunnel 4). The VMM 234 uses each of the Guest Flow Labels generated by the virtual gateway 237 to map each packet 238A, 238B, 238C, and 238D (or 324A, 324B, 324C, and 324D in Figure 3) to one of tunnels 241, 242, 243, and 244.

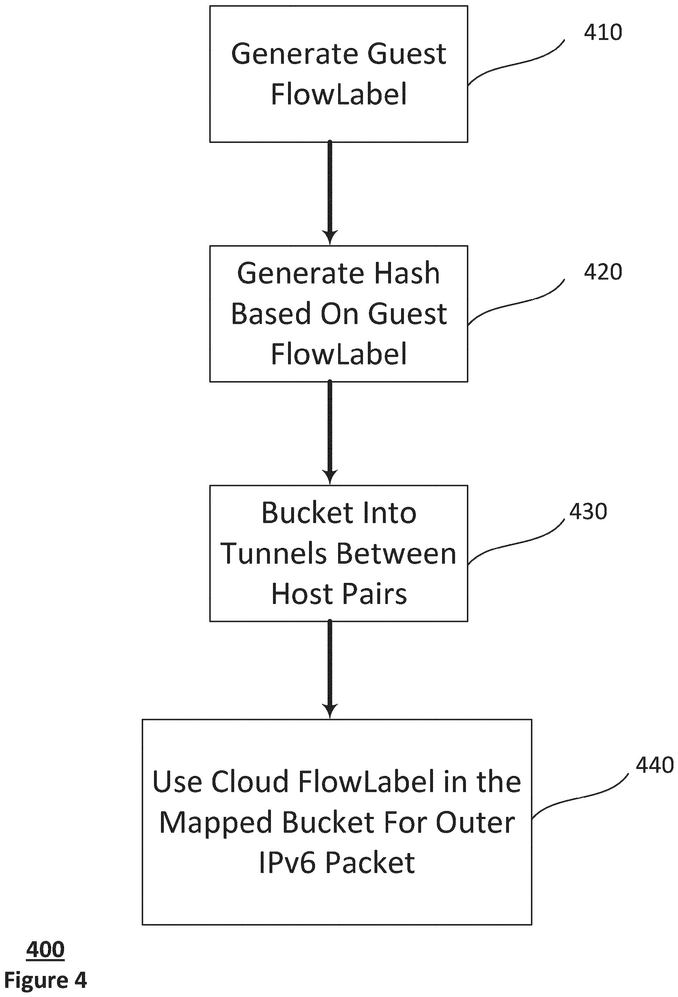

VMM 234 maps each packet by hashing the packet's Guest Flow Label and, based on a hash value, assigning the Guest Flow Label to a tunnel associated with a particular pair of hosts, such as hosts 230, 250. In general, any function that converts a given numeric or alphanumeric set of data to an integer value can be used. The integer value can then be used as an index in a hash table. A process 400 for mapping the packets into the tunnels is shown in Figure 4. As shown, a Guest Flow Label 410 is generated and provided as input to a hashing block 420. Because the Guest Flow Label for each packet copy is different, the hash of each Guest Flow Label most likely results in a different hash value. Further, by randomly generating or allocating flow labels, a set of hits within the flow label field may be used as a hash key. Each hash value will most likely be assigned, and thus mapped, to a different tunnel. In some instances, although unlikely, the hashing process may not produce different hash values for different flow labels or different hash values may get associated with the same packet. Flow labels are assigned using bucketing operation or step 430. The bucketing operation 430, for example, involves bucketing a Guest Flow Label into a table that identifies the tunnels that couple host 230 to host 250. For instance, each column in a table may be associated with a given tunnel. Hash values within a certain range, for example, may be associated with each column such that a hash value for a given flow label is associated with a given column in the table. The term "flow label" as used herein includes Guest Flow Labels and may also include Cloud Flow Labels (discussed below).

At block 440, a flow label (for clarity referred to as a Cloud Flow Label), based on the buckets associated with the tunnels associated with the hash values, is then applied to the packet copies or replicas 238A, 238B, 238C, and 238D. Examples of the resulting packet are shown in Figure 3 as packets 330A, 330B, 330C, and 330D. As shown, each of these packets includes a Cloud Flow Label for a given mapped bucket that is used in the new outer IPv6 packet. Specifically, copy packet 324A gets encapsulated into packet 330A with a Cloud Flow Label 0x01122, 324B into packet 330B with a Cloud Flow Label 0x03344, 324C into packet 330C with a Cloud Flow Label 0x05566, and 324D into packet 330D with a Cloud Flow Label 0x07788. Since each Cloud Flow Label maps to a different tunnel and path between a source host and destination or sink host, each packet copy traverses a different path through the network.

Returning to Figure 2, packet copies 238A, 238B, 238C, and 238D are shown as mapped to tunnels 241, 242, and 244. Specifically, packet 238A (corresponding to packet copy 330A) is mapped to tunnel 241, packets 238B (corresponding to packet copy 330B) and 238D (corresponding to packet copy 330D) are mapped to tunnel 242, and packet 238C (corresponding to packet copy 330C) is mapped to tunnel 244. As shown in Figure 2, packet 238B was lost during transmission between hosts 230 and 250. However, packets 238A, 238C, and 238D were successfully communicated to host 250, improving the reliability of the system.

As shown in Figure 2, it is possible that in some instances the mapping process may result in some packet copies (packets 238B and 238D) being sent over the same tunnel. In accordance with the disclosed technology, in most instances at least some of the packet copies will be transported between the source and destination hosts using different tunnels or paths, leading to improvements in the reliability of the system. Accordingly, as also shown in Figure 2, if a failure occurs on a given tunnel carrying a packet copy, the other packet copies will be unaffected by such a failure and will be delivered to the second host 250. As long as all of the duplicates are not mapped to the same tunnel, which is highly unlikely, the reliability of the system is improved. In this regard, we note that the technique and mechanisms described herein are separate from other protection schemes that may be applied at other layers in the network, *e*.*g*., physical or network layer routing or path switching.

As shown in Figure 2, VMM 252 receives packets 238A, 238C, and 238D. VMM 252 processes each of these packets by removing the header for the outer IP packet (*e.g*., see Figure 3, <IPv6 PSP pkt: FL: 0x01122>) and passes the inner packets 238A, 238C, and 238D to virtual gateway 256. PSP refers to the PSP Security Protocol, which specifies the packet format used by tunnels between hosts. Virtual gateway 256 thus receives the packet copies including the Guest Flow Labels and sequence number. It then uses the sequence number in processing redundant copies. For instance, a three tuple of <source IP address, destination IP address, sequence number> can be used to track packet arrival per source, per group. The first time a given sequence number is received the associated packet is processed, but any subsequent packet copy with the same sequence number is dropped. One copy of the packet 260 is then provided to listener 216, in this example packet copy 238A.

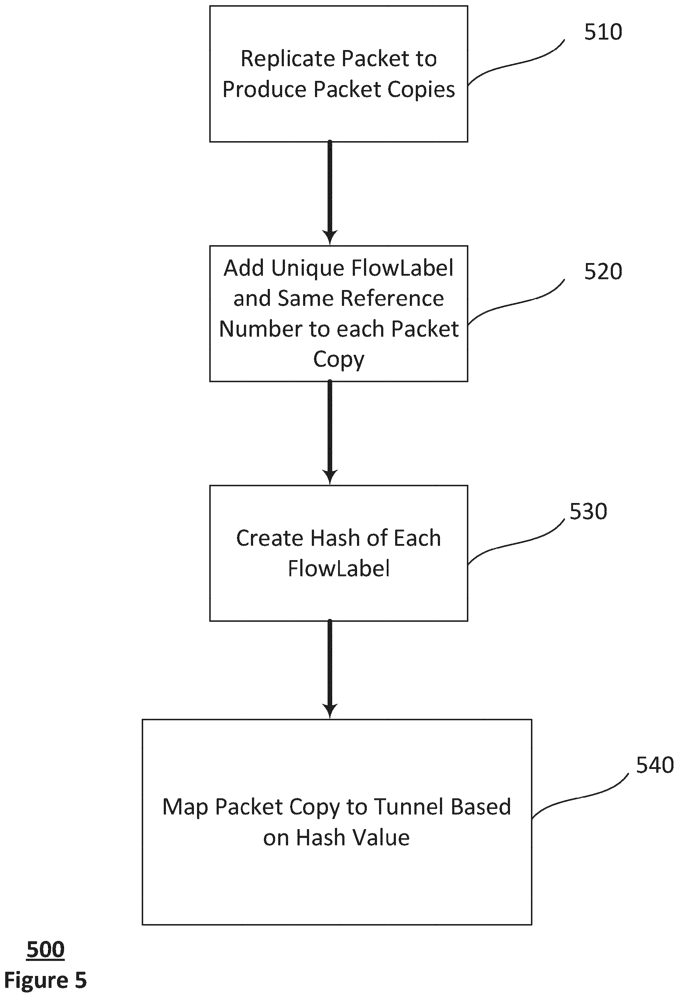

Turning now to Figure 5, there is shown a method or process 500 in accordance with an aspect of the disclosed technology. The process 500 begins with replication of a packet to produce packet copies or packet replicas, block 510. As indicated above, the replication or copying process is done at the virtualization layer of a host machine. In the example discussed above, copying operations were performed by a virtual gateway running on a VM. In other examples, copy operations may occur at the guest layer and the packet copies are then provided to the virtual gateway.

The packet copies are then processed at block 520 by appending or adding a different Guest Flow Label to each copy and a sequence number to each copy for a given original packet. The same sequence number is added to each packet replica or copy. Different original packets would get different sequence numbers. This operation can be performed by a virtual gateway or, where the copies or replicas are created at the guest layer, the sequence number would be added at the guest layer and provided to the virtual gateway.

Steps 510 and 520 are performed inside the virtual gateway, *e*.*g*., GW VM 114 or GW1 237. The following steps, 530 and 540, are performed at the virtualization layer, *e.g*., inside the VMM, e.g., virtualization software 121 or VMM 234. In this regard, the virtual gateway is considered part of the guest layer.

At block 530, a hash value is created based on each guest flow label. At block 540, the hash values are used to assign each packet copy to two or more tunnels between a source and destination host or node for the packets. In some examples, using the different tunnels available, the host at the source, *e*.*g*., host 230, may groom the traffic paths between itself and the second host 250 such that the best paths between the two hosts are selected for transporting traffic. Grooming, for example, may include probing different paths at fixed intervals to determine and rank the best paths available. In the example system above, only four paths or tunnels are shown. However, as a practical matter, many more paths or tunnels (*e.g*., 16) may exist between the hosts 230 and 250. Grooming may then be used to select, for example, the four best tunnels or paths for a given instant of time and those four paths used to transport the packet copies or replicas. Grooming is not necessary, however. In some examples, the technology can be applied without path grooming by assigning guest flow labels directly on the outer IPv6 Flow Label. More specifically, where host-host traffic uses IPv6, the Guest Flow Label can be used without the hashing/bucketing process.

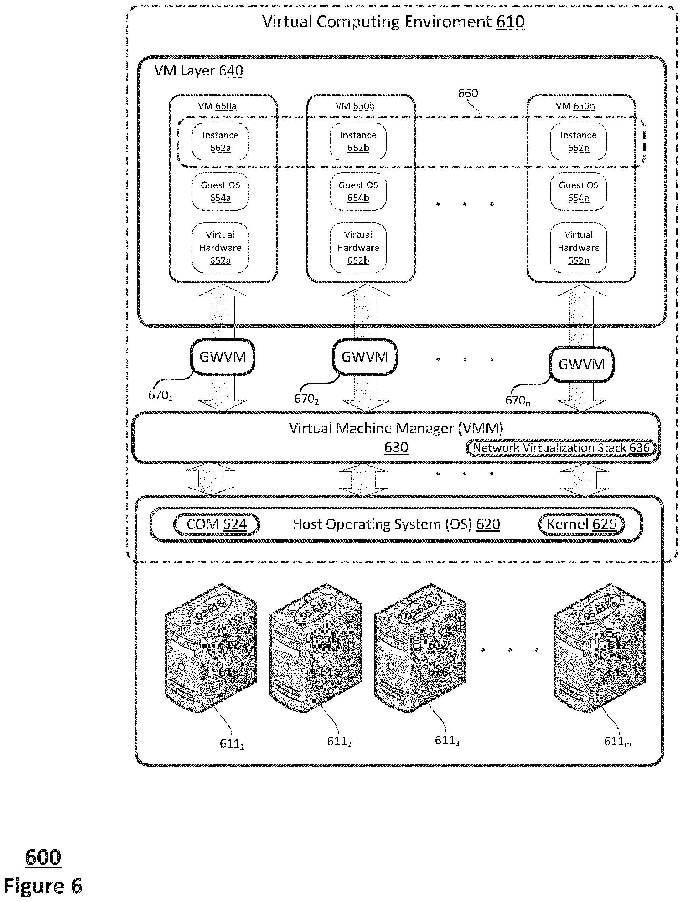

Turning now to Figure 6, there is shown an example of system 600 showing a virtual computing environment 610 in accordance with the disclosed technology. The system 600 may comprise either host discussed in relation to Figures 1 and 2, and the virtualization environment associated with each of hosts 230, 250. Further, as shown in Figure 6, each of hosts 230, 250 may comprise multiple physical machines 611 that are managed by a VMM 630. In this regard, the system 600 may represent a datacenter at a given geographic location. As such, hosts 230, 250 may each reside in different datacenters, host 230 at a datacenter in Region A/Zone X and host 250 at a datacenter in Region B/Zone Y.

The virtual computing environment 610 includes a VMM 630 and a VM layer 640 running one or more VMs 650a-n configured to execute instances 662a-n of one or more software applications 660. Each host machine 611 may include one or more physical central processing units (pCPU) 612 and associated memory hardware 616. While each hardware resource or host 611 is shown having a single physical processor 612, a host 611 may include multiple physical processors 612. Hosts 611 also include physical memory 616, which may be partitioned by host operating system (OS) 620 into virtual memory and assigned for use by VMs 650 in the VM layer 640, by the VMM 630 or host OS 620. Physical memory 616 may comprise random access memory (RAM) and/or disk storage.

Host operating system (OS) 620 may execute on a given one of the host machines 611 or may be configured to operate across a collection, including a plurality, of the host machines 611. For convenience, Figure 6 shows the host OS 620 as operating across the collection of machines 611₁ through 611ₘ. Further, while the host OS 620 is illustrated as being part of the virtual computing environment 610, each host machine 611 is equipped with its own OS 618. However, from the perspective of a virtual environment, the OS on each machine appears as and is managed as a collective OS 620 to a VMM 630 and VM layer 640.

In some examples, the VMM 630 corresponds to a hypervisor that includes at least one of software, firmware, or hardware configured to create, instantiate/deploy, and execute the VMs 650. A computer, such as data processing hardware 612, associated with the VMM 630 that executes the one or more VMs 650 is typically referred to as a host machine 611 (as used above), while each VM 650 may be referred to as a guest machine. Here, the VMM or hypervisor 630 is configured to provide each VM 650 a corresponding guest operating system (OS) 654, *e.g.,* 654a-n, having a virtual operating platform and manages execution of the corresponding guest OS 654 on the VM 650. As used herein, each VM 650 may be referred to as an "instance" or a "VM instance." In some examples, multiple instances of a variety of operating systems may share virtualized resources. Figure 6 shows one VMM 630 managing multiple VMs 650 but, in some examples, each VM 650 may be managed by a single VMM 630.

In accordance with aspects of the disclosed technology, VMM 630 includes a network virtualization stack 636. Network virtualization stack 636 provides virtual NIC and virtual switch functionality, as well as packet processing functionality such as encapsulation and routing via a flow table. Network virtualization stack 636 performs the hashing and bucketing functionality described above in relation to mapping packet copies to different tunnels.

The system 600 also includes a plurality of GW VMs 670, 670₁-670ₙ. As previously discussed, the virtual gateways run in VMs created and managed by VMM 630. In some examples, VM layer 640 is considered the guest layer and can include the virtual gateways 670. In other examples, the virtual gateways may run in the VMM 630. For instance, the virtual gateways may form part of network virtualization stack 636.

The VM layer 640 includes one or more virtual machines 650. The distributed system 600 enables a user (through one more user computing devices) to launch VMs 650 on demand, *i.e.,* by sending a command or request to the distributed system 600 via a network, *e.g.,* a virtual private network, local area network, a wide area network, etc.

A VM 650 emulates a real computer system (*e*.*g*., host machine 611) and operates based on the computer architecture and functions of the real computer system or a hypothetical computer system, which may involve specialized hardware, software, or a combination thereof. An instance 662 of a software application 660, or simply an instance, refers to a VM 650 hosted on (executing on) the data processing hardware 612 of the distributed system 600.

The host OS 620 virtualizes underlying host machine hardware and manages concurrent execution of one or more VM instances 650. For instance, host OS 620 may manage VM instances 650a-n and each VM instance 650 may include a simulated version of the underlying host machine hardware, or a different computer architecture. The simulated version of the hardware associated with each VM instance 650, 650a-n is typically referred to as virtual hardware 652, 652a-n. The virtual hardware 652 may include one or more virtual central processing units (vCPUs) ("virtual processor") emulating one or more physical processors 612 of a host machine 611.

The virtual hardware 652 may further include virtual memory in communication with the virtual processor and storing guest instructions (*e*.*g*., guest software) executable by the virtual processor for performing operations. For instance, the virtual processor may execute instructions from the virtual memory that cause the virtual processor to execute a corresponding individual service instance 662 of the software application 660. Here, the individual service instance 662 may be referred to as a guest instance that cannot determine if it is being executed by the virtual hardware 652 or the physical data processing hardware 612. A host machine's microprocessor(s) can include processor-level mechanisms to enable virtual hardware 652 to execute software instances 662 of applications 660 efficiently by allowing guest software instructions to be executed directly on the host machine's microprocessor without requiring code-rewriting, recompilation, or instruction emulation. The virtual memory may be interchangeably referred to as a "memory resource" associated with the VM instance 650. The memory resource may include a target memory resource level required for executing the corresponding individual service instance 662.

The virtual hardware 652 may further include at least one virtual storage device that provides run-time capacity for the service on the physical memory hardware 616. The at least one virtual storage device may be referred to as a storage resource associated with the VM instance 650. The storage resource may include a target storage resource level required for executing the corresponding individual service instance 662. The guest software executing on each VM instance 650 may further assign network boundaries (*e*.*g*., allocate network addresses) through which respective guest software can communicate with other processes.

The guest OS 654 executing on each VM 650 includes software that controls the execution of the corresponding individual service instance 662, *e.g.,* one or more of 662a-n of the application 660 by the VM instance 650. The guest OS 654, 654a-n executing on a VM instance 650, 650a-n can be the same as or different than another guest OS 654 executing on the other VM instances 650. In some implementations, a VM instance 650 does not require a guest OS 654 in order to execute the individual service instance 662. The host OS 620 may further include virtual memory reserved for a kernel 626 of the host OS 620. The kernel 626 may include kernel extensions and device drivers, and may perform certain privileged operations that are off limits to processes running in a user process space of the host OS 620. Examples of privileged operations include access to different address spaces, access to special functional processor units in the host machine 611 such as memory management units, and so on. A communication process 624 running on the host OS 620 may provide a portion of VM network communication functionality and may execute in the user process space or a kernel process space associated with the kernel 626.

The disclosed technology may take the form of an apparatus, system, or may operate as a process or method performed by an apparatus or system and can include the following combinations of features and sub-features:
**F1**. A packet communication system, comprising:
   a packet source that outputs a data packet; and
   a first host machine, the first host machine comprising:
      a first virtual gateway implemented as a virtual machine and communicatively coupled to the packet source to receive the data packet, the first virtual gateway generating two or more packet copies of the data packet and associating a different guest flow label with each of the packet copies and a sequence number with each of the packet copies to generate a first modified packet copy having a first guest flow label and a second modified packet copy having a second guest flow label; and
      a first computing resource communicatively coupled to the first virtual gateway, the first computing resource adding a first cloud flow label to the first modified packet copy and a second cloud flow label to the second modified packet copy and, based on the first and second guest flow labels, associating the first modified packet copy with a first tunnel and the second modified packet copy with a second tunnel different than the first tunnel, the first and second tunnels used to communicate traffic between the first host machine and a second host machine.
**F2.** The packet communication system of **F1**, wherein a guest flow label is used to maintain a sequential flow of packets that belong to a communication between two virtual gateways.
**F3.** The packet communication system of any one of **F1** to **F2**, wherein the first computing resource associating the first modified packet copy with the first tunnel comprises hashing the first guest flow label associated with the first modified packet copy to produce a first hash value and associating the first hash value with the first tunnel.
**F4.** The packet communication system of any one of **F1** to **F3**, wherein associating the first hash value with the first tunnel comprises bucketing, based on the first hash value, the first modified packet copy in a table identifying tunnels between the first virtual host and a second virtual host used for transporting data between the first and second host machines.
**F5.** The packet communication system of **F4**, wherein the first cloud flow label is used to generate an IPv6 packet encapsulating the first modified packet copy.
**F6.** The packet communication system of **F3**, wherein the first hash value is different than a second hash value associated with a hash of the second guest flow label.
**F7.** The packet communication system of any one of **F1** to **F6**, wherein the first virtual gateway comprises a first virtual machine.
**F8.** The packet communication system of any one of **F1** to **F7**, wherein the two or more packet copies generated comprise IPv4 data packets.
**F9.** The packet communication system of **F8**, wherein the first computing resource encapsulates the first modified packet copy and the second modified packet copy in respective IPv6 packets that respectively include the first cloud flow label and the second cloud flow label.
**F10.** The packet communication system of any one of **F1** to **F9**, comprising a second virtual gateway that receives the first modified packet copy and the second modified packet copy and uses the sequence number to discard the first modified packet copy or the second modified packet copy.
**F11**. The packet communication system of **F10**, wherein the second virtual gateway uses a sliding window to determine whether the first modified packet copy or the second modified packet copy is redundant.
**F12.** The packet communication system of any one of **F1** to **F11**, wherein the first and second tunnels comprise tunnels that are keyed to an IPv6 Flow Label.
**F13.** A packet processing method for data transmissions, comprising:
   generating a first copy and a second copy of a data packet at a virtual machine layer of a source host machine configured to support virtual machines;
   appending, at the virtual machine layer, a sequence number and a first flow label to the first copy of the data packet to create a first modified data packet and the sequence number and a second flow label to the second copy of the data packet to create a second modified data packet, the first flow label being different than the second flow label;
   creating a first hash value based on the first flow label and a second hash value based on the second flow label;
   associating, based on the first hash value, the first flow label with a first tunnel used for data transmissions from the source host machine;
   associating, based on the second hash value, the second flow label with a second tunnel used for the data transmissions from the source host machine, the second tunnel being different than the first tunnel; and
   encapsulating the first modified data packet in a first transmission data packet having a first network layer flow label and the second modified data packet in a second transmission data packet having a second network layer flow label, wherein the first network layer flow label identifies packets for transmission on the first tunnel and the second network layer flow label identifies packets for transmission on the second tunnel.
**F14.** The packet processing method of **F13**, wherein the first and second flow labels comprise IPv6 Flow Labels.
**F15.** The packet processing method of any one of **F13** to **F14,** wherein the first and second network layer flow labels comprise IPv6 Flow Labels.
**F16.** The packet processing method of any one of **F13** to **F15,** wherein associating the first flow label with a tunnel comprises bucketing, based on the first hash value, the first modified data packet in a table identifying tunnels between the source host machine and a destination host machine.
**F17.** The packet processing method of any one of **F13** to **F16,** wherein the data packet comprises an IPv4 data packet.
**F18.** The packet processing method of any one of **F13** to **F17,** wherein the steps of creating, associating, and encapsulating are performed by a virtual machine manager.
**F19.** The packet processing method of any one of **F13** to **F18,** comprising randomly generating the first flow label and the second flow label.
**F20.** The packet processing method of any one of **F13** to **F19,** wherein the virtual machine layer comprises a guest layer in a virtual computing environment.

Although the technology herein has been described with reference to particular examples, it is to be understood that these examples are merely illustrative of the principles and applications of the disclosed technology. It is, therefore, to be understood that numerous modifications may be made to the illustrative examples and that other arrangements may be devised without departing from the spirit and scope of the present technology as defined by the appended claims. For instance, although the example operations are shown with certain functions being performed at different layers, *e*.*g*., virtualization layer versus guest layer, the different functionalities can be implemented at one layer or different functionalities may be performed at different layers than those described above.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims. In addition, the provision of the examples described herein, as well as clauses phrased as "such as," "including," and the like, should not be interpreted as limiting the subject matter of the claims to the specific examples; rather, the examples are intended to illustrate only some but not all possible variations of the disclosed technology. Further, the same reference numbers in different drawings can identify the same or similar elements.

## Claims

1. A packet communication system, comprising:
a packet source that outputs a data packet; and
a first host machine, the first host machine comprising:
a first virtual gateway implemented as a virtual machine and communicatively coupled to the packet source to receive the data packet, the first virtual gateway generating two or more packet copies of the data packet and associating a different guest flow label with each of the packet copies and a sequence number with each of the packet copies to generate a first modified packet copy having a first guest flow label and a second modified packet copy having a second guest flow label; and
a first computing resource communicatively coupled to the first virtual gateway, the first computing resource adding a first cloud flow label to the first modified packet copy and a second cloud flow label to the second modified packet copy and, based on the first and second guest flow labels, associating the first modified packet copy with a first tunnel and the second modified packet copy with a second tunnel different than the first tunnel, the first and second tunnels used to communicate traffic between the first host machine and a second host machine.

2. The packet communication system of claim **1,** wherein a guest flow label is used to maintain a sequential flow of packets that belong to a communication between two virtual gateways.

3. The packet communication system of any one of claims **1** or **2,** wherein the first computing resource associating the first modified packet copy with the first tunnel comprises hashing the first guest flow label associated with the first modified packet copy to produce a first hash value and associating the first hash value with the first tunnel.

4. The packet communication system of claim **3,** wherein associating the first hash value with the first tunnel comprises bucketing, based on the first hash value, the first modified packet copy in a table identifying tunnels between a first virtual host and a second virtual host used for transporting data between the first and second host machines, optionally wherein the first cloud flow label is used to generate an IPv6 packet encapsulating the first modified packet copy.

5. The packet communication system of any one of claims **3** or **4,** wherein the first hash value is different than a second hash value associated with a hash of the second guest flow label.

6. The packet communication system of any one of the preceding claims, wherein the first virtual gateway comprises a first virtual machine.

7. The packet communication system of any one of the preceding claims, wherein the two or more packet copies generated comprise IPv4 data packets, optionally wherein the first computing resource encapsulates the first modified packet copy and the second modified packet copy in respective IPv6 packets that respectively include the first cloud flow label and the second cloud flow label.

8. The packet communication system of any one of the preceding claims, comprising a second virtual gateway that receives the first modified packet copy and the second modified packet copy and uses the sequence number to discard the first modified packet copy or the second modified packet copy, optionally wherein the second virtual gateway uses a sliding window to determine whether the first modified packet copy or the second modified packet copy is redundant.

9. The packet communication system of any one of the preceding claims, wherein the first and second tunnels comprise tunnels that are keyed to an IPv6 Flow Label.

10. A packet processing method, comprising:
generating a first copy and a second copy of a data packet at a virtual machine layer of a source host machine configured to support virtual machines;
appending, at the virtual machine layer, a sequence number and a first flow label to the first copy of the data packet to create a first modified data packet and the sequence number and a second flow label to the second copy of the data packet to create a second modified data packet, the first flow label being different than the second flow label;
creating a first hash value based on the first flow label and a second hash value based on the second flow label;
associating, based on the first hash value, the first flow label with a first tunnel used for data transmissions from the source host machine;
associating, based on the second hash value, the second flow label with a second tunnel used for the data transmissions from the source host machine, the second tunnel being different than the first tunnel; and
encapsulating the first modified data packet in a first transmission data packet having a first network layer flow label and the second modified data packet in a second transmission data packet having a second network layer flow label, wherein the first network layer flow label identifies packets for transmission on the first tunnel and the second network layer flow label identifies packets for transmission on the second tunnel.

11. The packet processing method of claim 10, wherein the first and second flow labels comprise IPv6 Flow Labels, optionally wherein the first and second network layer flow labels comprise IPv6 Flow Labels.

12. The packet processing method of any one of claims **10** or **11,** wherein associating the first flow label with a tunnel comprises bucketing, based on the first hash value, the first modified data packet in a table identifying one or more tunnels between the source host machine and a destination host machine.

13. The packet processing method of any one of claims **10** to **12,** wherein the data packet comprises an IPv4 data packet.

14. The packet processing method of any one of claims **10** to **13,** wherein the steps of creating, associating, and encapsulating are performed by a virtual machine manager.

15. The packet processing method of any one of claims **10** to **14,** comprising randomly generating the first flow label and the second flow label; and/orwherein the virtual machine layer comprises a guest layer in a virtual computing environment.
